**Europäisches Patentamt**

**European Patent Office**

**Office européen des brevets**

(19)

(11) Veröffentlichungsnummer: **0 283 439 B1**

(12) # EUROPÄISCHE PATENTSCHRIFT

(45) Veröffentlichungstag der Patentschrift :
**27.02.91 Patentblatt 91/09**

(51) Int. Cl.⁵ : **F03D 5/00, F16H 21/46**

(21) Anmeldenummer : **88810160.7**

(22) Anmeldetag : **16.03.88**

(54) **Vorrichtung zur Umwandlung der Energie eines strömungsfähigen Mediums in ein Drehmoment.**

(30) Priorität : **17.03.87 CH 999/87**

(43) Veröffentlichungstag der Anmeldung :
**21.09.88 Patentblatt 88/38**

(45) Bekanntmachung des Hinweises auf die
Patenterteilung :
**27.02.91 Patentblatt 91/09**

(84) Benannte Vertragsstaaten :
**BE CH DE ES FR GB GR IT LI NL SE**

(56) Entgegenhaltungen :
**CH-A- 216 760**
**CH-A- 555 490**
**DE-C- 589 452**

(73) Patentinhaber : **Dettwiler, Hermann**
**Hauptstrasse 45**
**CH-4417 Ziefen (CH)**

(72) Erfinder : **Dettwiler, Hermann**
**Hauptstrasse 45**
**CH-4417 Ziefen (CH)**

(74) Vertreter : **Eschmann, Heinz et al**
**A. Braun, Braun, Héritier, Eschmann AG**
**Patentanwälte Holbeinstrasse 36-38**
**CH-4051 Basel (CH)**

EP 0 283 439 B1

Jouve, 18, rue Saint-Denis, 75001 PARIS

**Beschreibung**

Die vorliegende Erfindung betrifft eine Vorrichtung gemäss dem Oberbegriff des unabhängigen Patentanspruchs 1.

Der umstülpbare Würfel ist seit dessen Entdeckung durch Paul Schatz in zahlreichen Veröffentlichungen besprochen und auch in der Technik eingesetzt worden. Eine umfassende Darstellung der diesbezüglichen Forschungsresultate findet sich in Paul Schatz: "Rhythmusforschung und Technik", Verlag Freies Geistesleben, 1975. Praktische Anwendungen sind beispielsweise Gegenstand der schweizerischen Patente Nr. 216 760, 361 701, 366 710 und 555 490.

Eines der wesentlichen Elemente des umstülpbaren Würfels ist die Würfelgürtelkette, welche eine taumelnde und rotierende Körperbewegung hervorzubringen vermag und zum Antrieb von Mischmaschinen Verwendung fand. Dagegen ist es bisher noch nicht gelungen, die spezielle Bewegungscharakteristik der umstülpbaren Würfelgürtelkette zur Ausnutzung der in strömenden Medien vorhandenen Energie oder zum Antrieb von Fahrzeugen einzusetzen.

Es ist die Aufgabe der vorliegenden Erfindung, eine auf dem Prinzip der umstülpbaren Würfelgürtelkette beruhende Vorrichtung vorzuschlagen, welche sowohl als Wind- und Wasserrad eingesetzt werden kann und die sich ferner auch anstelle von Schiffsschrauben, Flugzeugpropellern und Helikopterrotoren verwenden lässt und die im Gegensatz zu bekannten rotierenden Vorrichtungen dem Bewegungscharakter der strömenden Medien, das heisst der Luft und des Wassers, weit besser entspricht und daher mit einem erheblich besseren Wirkungsgrad arbeitet.

Diese Aufgabe wird dank einer Vorrichtung gelöst, welche im kennzeichnenden Teil des unabhängigen Patentanspruchs 1 definiert ist.

Dank der speziellen, der Würfelgürtelkette innewohnenden Bewegungscharakteristik erfassen die wälzenden und rollenden Bewegungen von Luft und Wasser die schaufel- und flügelartigen Mitnehmerelemente der neuen Vorrichtung, als ob sie ein Bestandteil des sie umströmenden Mediums wären. Durch gezieltes Leiten des Mediums können Strömungen erzielt werden, welche diese Tendenzen noch steigern.

Wie durch Versuche am Modell bestätigt wurde, hat die durch den umstülpbaren Würfelgürtel erzielbare Bewegung im Gegensatz zu einem fest gelagerten Schaufelrad den Vorteil, dass die angreifende Mediumwelle jeweils mindestens eine der an der Vorrichtung befindlichen Schaufeln ergreift und über 90° der Drehbewegung, welche die Schaufel zugleich noch über den drehmomentgünstigen Dreieckpunkt des Würfelgürtels drückt, mitnimmt. Die nächstfolgende Schaufel taucht in gegenläufiger Bewegung quasi unter der Mediumwelle durch, um nach dem Ablauf der 90°-Drehbewegung, aber diesmal auf der Gegenseite, dem Medium ihre Angriffsfläche darzubieten. Nach vier Schaufeldurchgängen hat der Würfelgürtel eine Umdrehung vollzogen.

Anhand der beiliegenden Zeichnung wird nachstehend ein Ausführungsbeispiel der erfindungsgemässen Vorrichtung nebst einiger Konstruktionsvarianten beschrieben.

Fig. 1 zeigt die Anordnung zweier halber Würfelgürtelketten an einem gemeinsamen Gestell,

Fig. 2 veranschaulicht anhand einer vereinfachten Perspektivdarstellung die Anordnung von vier Mitnehmerflügeln,

Fig. 3 zeigt die in Fig. 2 abgebildete Vorrichtung in einer anderen Bewegungsphase,

Fig. 4 ist eine Perspektivdarstellung einer Ausführungsvariante,

Fig. 5 bis 8 zeigen in Seitenansicht vier typische Bewegungsphasen der Vorrichtung, wobei die Vorrichtung jeweils von einer Figur zur nächsten um 90° weiter gedreht zu denken ist,

Fig. 5a bis 8a sind die zugehörigen Draufsichten,

Fig. 9 veranschaulicht eine weitere Möglichkeit der Abnahme bzw. Weiterleitung des an der Vorrichtung anfallenden Drehmomentes und die

Fig. 10 und 11 zeigen weitere konstruktive Abwandlungsmöglichkeiten der Vorrichtung.

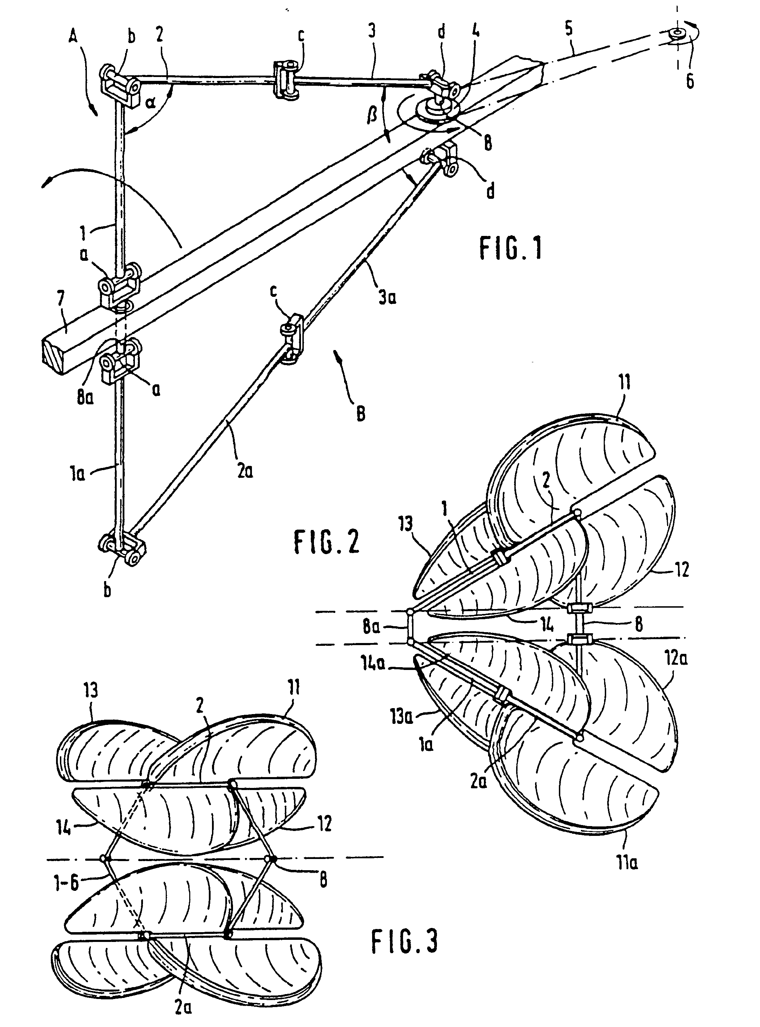

Gemäss Fig. 1 sind zwei halbe Würfelgürtelketten A und B auf einem gemeinsamen Gestell 7 montiert. Jede halbe Würfelgürtelkette A und B weist in bekannter Weise zwei seitliche Gelenkarme 1 und 3 bzw. 1a und 3a auf, zwischen welchen der mittlere Gelenkarm 2 bzw. 2a angeordnet ist. Die seitlichen Gelenkarme 1, 3, 1a und 3a sind im Gestell 7 mittels ortsfester Achsen 8, 8a lose drehbar gelagert, wobei bei der dargestellten Zwillingsanordnung eine einzige Achse 8 bzw. 8a für beide Gelenkarme 1/1a bzw. 3/3a genügt.

Sowohl an den ortsfesten Achsen 8, 8a als auch beim Uebergang von einem Gelenkarm zum Nachbararm sind Schwenkachsen a, b, c und d angeordnet, welche quer zu den jeweiligen Gelenkarmachsen verlaufen und Scharnierfunktion haben. Wie Fig. 1 zeigt, sind die vier Schwenkachsen a, b, c und d in ihrer Aufeinanderfolge um jeweils 90° gegeneinander versetzt.

Bei der Ausführungsform nach Fig. 1 ist die ortsfeste Achse 8 mit einer Keilriemenscheibe 4 versehen, welche über einen Keilriemen 5 mit einem Antriebs- oder Abtriebsrad 6 verbunden ist. Treibt man die Vorrichtung über die Keilriemenscheibe 15 an, so beschreiben die beiden Würfelgürtelhälften A und B die bekannte charakteristische Bewegung.

Soll die in Fig. 1 gezeigte Anordnung beispielsweise zur Ausnützung von Windenergie eingesetzt werden, so können nach Fig. 2 und 3 z.B. an den mittleren Gelenkarmen 2 und 2a jeweils vier, das heisst insgesamt acht Mitnehmerflügel 11, 12, 13, 14 und 11a, 12a, 13a, 14a befestigt werden. Diese Ausführungsform nach Fig. 2 und 3 zeigt eine Flügelform, welche schalenförmig ausgebildet ist und sich jeweils vom mittleren Gelenkarm 2, 2a über einen angrenzenden Gelenkarm erstreckt, der überdeckt wird, wenn mittlerer und angrenzender Gelenkarm (2 und 1 bzw. 2a und 1a in der Bewegungsphase gemäss Fig. 2) miteinander fluchten. Die Form der Mitnehmerflügel kann vom Fachmann innerhalb eines weiten Spielraums abgewandelt werden.

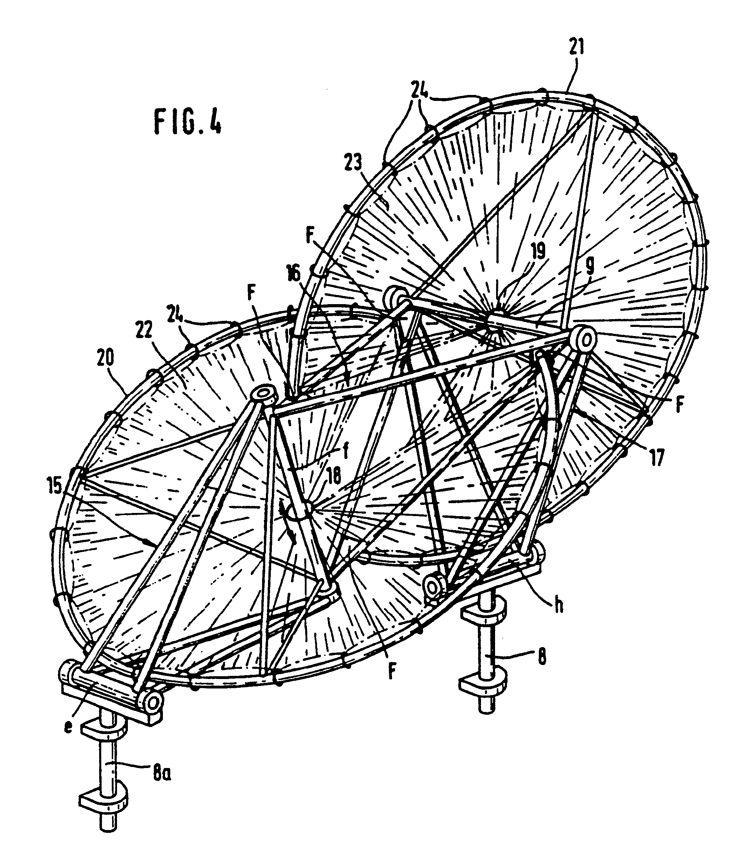

Eine bevorzugte Ausführungsform zeigt Fig. 4, wobei hier im Gegensatz zu Fig. 1 bis 3 nur eine einzige halbe Würfelgürtelkette gezeigt ist, die aber ohne weiteres über die ortsfesten Achsen 8, 8a mit einer weiteren, unterhalb angeordneten Würfelgürtelkette kombiniert werden kann.

Auch hier besteht die halbe Würfelgürtelkette wiederum aus drei Gelenkarmen, die mit 15, 16 und 17 bezeichnet und als Rahmenkonstruktionen aus untereinander verschweissten Rohren zusammengesetzt sind. Die vier scharnierartigen Schwenkachsen sind hier mit e, f, g und h bezeichnet und erfüllen die gleiche Grundfunktion wie die Schwenkachse a bis d in Fig. 1. Eine Zusatzfunktion der Schwenkachsen f und g ist darin zu sehen, dass diese als Führung für einen Ring 18 bzw. 19 dienen, der sich im Zentrum einer von einem bogenförmigen Rahmen 20 bzw. 21 gehaltenen Folie 22 bzw. 23 befindet. Die Folie 22 bzw. 23, welche beispielsweise aus Segeltuch oder einem reissfesten Kunststoff bestehen kann, ist randseitig über Oesen 24 am Rahmen 20, 21 und zentral am Ring 18, 19 verankert. Da die Folie 22, 23 ferner nicht straff gespannt, sondern relativ locker im jeweiligen Rahmen hängt, kann sie sich im Winde blähen und die jeweils günstigste Form annehmen, wobei die Ringe 18, 19 auf den Schwenkachsen f und g lose gleiten.

Die Konturen der beiden Mitnehmerflügel 22 und 23, die durch bogenförmige Rahmen 20 und 21 begrenzt werden, sind grundsätzlich frei wählbar, insofern diese nicht mit der Gestellkonstruktion kollidieren. Eine bevorzugte Ausführungsform zeichnet sich jedoch durch eine Formgebung aus, gemäss welcher die Rahmen 22, 23 in ihren den Befestigungsstellen F gegenüberliegenden Bogenabschnitten den beiden Kufen eines Oloids entsprechen. Der Gesamtwirkungsgrad der Vorrichtung kann auf diese Weise nachweislich verbessert werden. Das ebenfalls von Paul Schatz entwickelte Oloid ist im schweizerischen Patent Nr. 500 000 beschrieben.

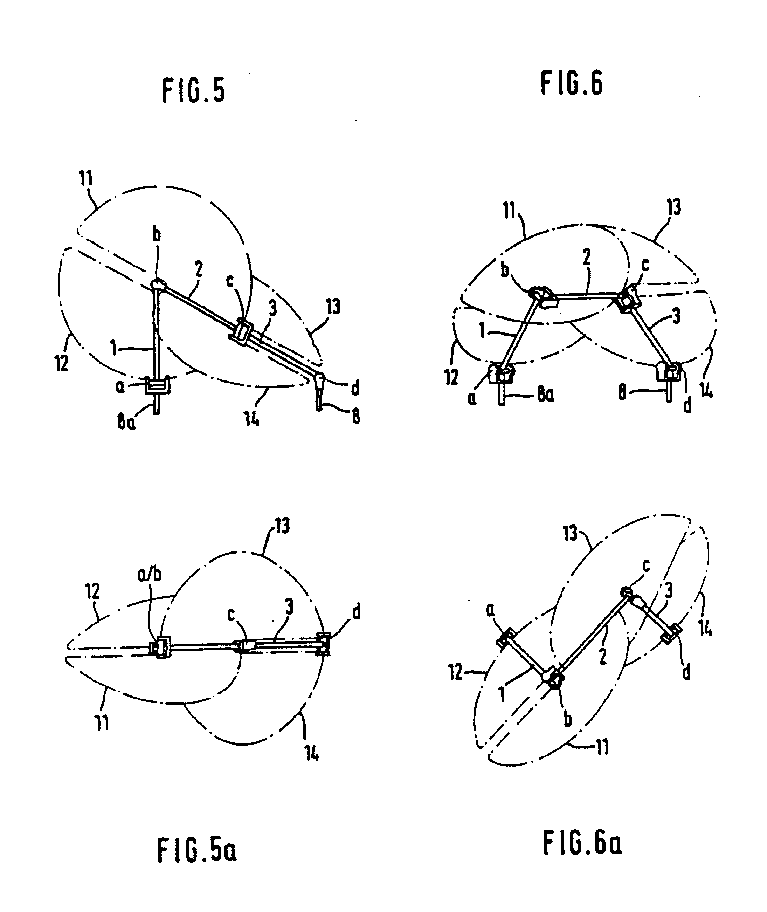

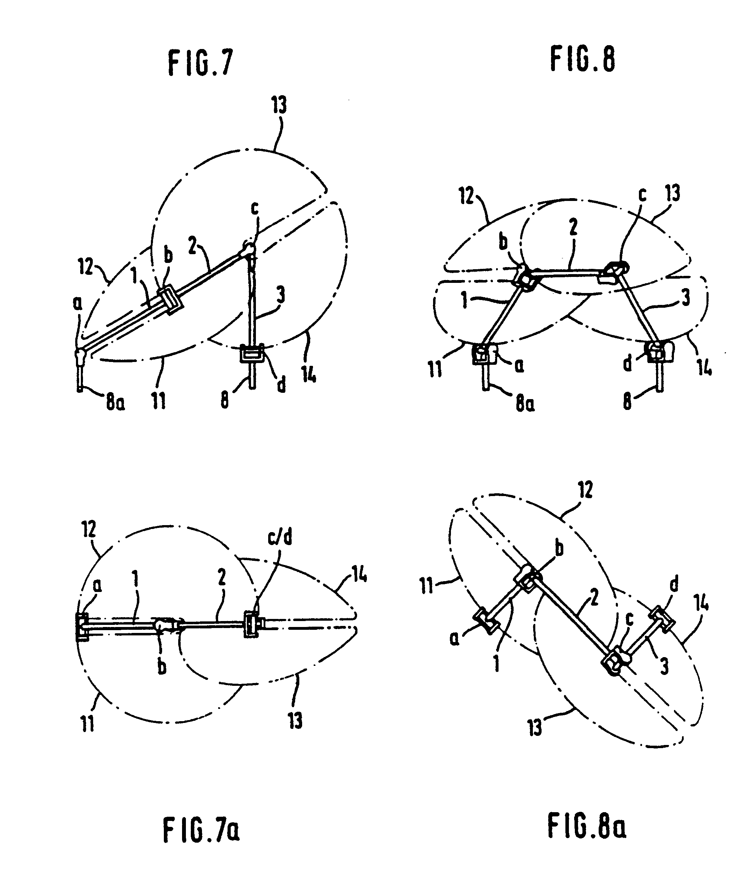

Die überraschend wirkungsvolle Funktion der beschriebenen Vorrichtung, die sich der Eigendynamik des strömungsfähigen Mediums weit besser einfügt, als die bekannten Rotationssysteme, ist eine direkte Folge der charakteristischen Kinematik des Würfelgürtels. Die Fig. 5 bis 8 zeigen in Seitenansicht, die Fig. 5a bis 8a in entsprechender Draufsicht vier verschiedene Phasen des Bewegungsablaufs, die sich jeweils um einen an den Achsen 8, 8a gemessenen Winkel von 90° voneinander unterscheiden.

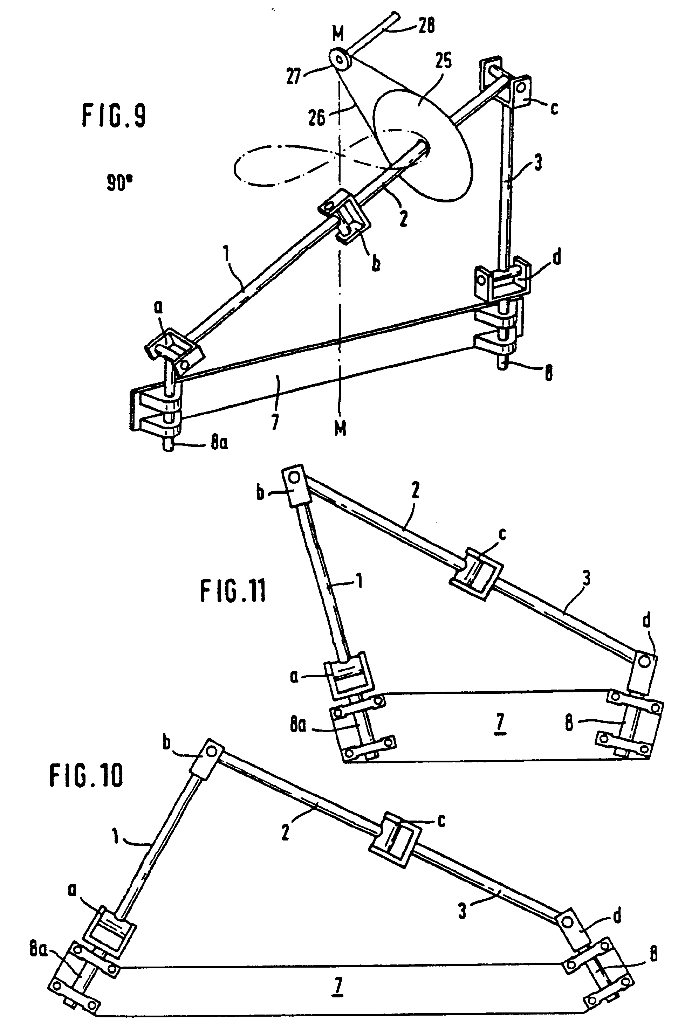

Wenn die anhand von Fig. 4 beschriebene Vorrichtung beispielsweise als Windrad betrieben und das von der Windenergie abgeleitete Drehmoment an einer der rotierenden Achsen 8/8a, oder auch an beiden, abgenommen wird, so ergibt sich notwendigerweise, aufgrund der dem Würfelgürtel innewohnenden Kinematik, eine ungleichmässige Rotationsbewegung, welche erforderlichenfalls durch entsprechende bekannte Mechanismen (vgl. z.B. CH-PS 361 701) korrigiert werden kann. Eine Möglichkeit, diese Korrektur zu umgehen, zeigt Fig. 9, in welcher die bereits eingeführten Bezugszahlen, sofern sie die gleichen Teile bezeichnen, beibehalten wurden.

Im Mittelbereich des mittleren Gelenkarms 2 ist eine Keilriemenscheibe 25 drehstarr befestigt und mittels eines Keilriemens 26 mit einer Abtriebsscheibe 27 verbunden. Die Abtriebsscheibe 27, die ihrerseits über eine Welle 28 mit einem Generator gekoppelt sein kann, ist oberhalb der gesamten Vorrichtung, und zwar in deren Mittelachse M-M, angeordnet. Bei einem Bewegungszyklus der Vorrichtung beschreibt die Keilriemenscheibe 25 zwar eine Lemniskate L, doch ist bei dieser Ausführungsform die an der Abtriebsscheibe 27 anfallende Rotationsbewegung gleichmässig. Es versteht sich, dass anstelle von Riemenscheiben und Uebertragungsriemen auch Kettentriebe oder andere endlose Uebertragungselemente verwendet werden können, welche zum Ausgleich von konstruktiven Spielen erforderlichenfalls mit einer elastischen Vorspannung montiert werden können.

Es sei ferner ausdrücklich erwähnt, dass die beschriebenen Ausführungsbeispiele sowohl zur Abgabe als auch zur Aufnahme einer rotierenden Bewegung dienen, das heisst sowohl zum Antrieb von Land-, Wasser- und Luftfahrzeugen, als auch zur Umwandlung von Strömungsenergie in ein Drehmoment, z.B. in Form eines Windrades, einsetzbar sind. Auch ist eine Verwendung als Ventilator möglich.

Die beschriebene Vorrichtung kann im Rahmen des Erfindungsgedankens vom Fachmann in vielfacher Hinsicht abgewandelt werden. So können beispielsweise die Grössenverhältnisse der drei Gelenkarme 1, 2 und 3 dahingehend variiert werden, dass der mittlere Gelenkarm 2 grösser, gleich gross oder kleiner als die beiden seitlichen Gelenkarme 1 und 3 ist. Die in Fig. 1 mit $\alpha$ und $\beta$ eingezeichneten Winkel, welche hier 90° und 30° betragen, müssen ebenfalls nicht eingehalten werden.

Wie bereits erwähnt, kann auch die Grösse der Mitnehmerelemente variierbar ausgebildet sein. So können die Mitnehmerelemente fächerartig geformt oder mit Jalousien versehen werden, wonach die Angriffsflächen bzw. die Laufcharakteristik verändert werden können.

Auch eine Neigung der Achsen 8 und 8a kann in vielen Varianten, wie die Fig. 10 und 11 zeigen, von Vorteil sein. Es ergibt sich hierdurch die Möglichkeit, unterschiedlichen Betriebsanforderungen gerecht zu werden, indem durch Variierung der Achsenneigung das Zusammenspiel von Flügeln und Medium verändert wird.

Der Ausdruck "schaufel- oder flügelartige Mitnehmerelemente : soll im vorliegenden Zusammenhang sämtliche starren oder biegsamen flächigen Gebilde wie Metallschaufeln, Folien aus Kunststoff oder Segeltuch etc. in den verschiedenen zweckdienlichen Formen umfassen.

## Ansprüche

1. Vorrichtung zur Umwandlung der Energie eines strömungsfähigen Mediums in ein Drehmoment oder umgekehrt, mit einem Gestell (7) und mindestens zwei im gegenseitigen Abstand an demselben angeordneten drehbar gelagerten Achsen (8, 8a), an welchen die beiden Endabschnitte der zwei seitliche Gelenkarme (1, 3) und einen mittleren Gelenkarm (2) aufweisenden halben Würfelgürtelkette (A, B) angelenkt sind, wobei die beiden seitlichen Gelenkarme (1, 3) mit den ortsfesten Achsen (8, 8a) und dem mittleren Gelenkarm (2) durch vier Schwenkachsen (a, b, c, d) verbunden sind, welche aufeinanderfolgend um jeweils 90° gegeneinander versetzt sind, dadurch gekennzeichnet, dass an mindestens einem der drei Gelenkarme (1, 2, 3) der halben Würfelgürtelkette (A, B) schaufel- oder flügelartige Mitnehmerelemente (11, 12, 13, 14, 11a, 12a, 13a, 14a, 22, 23) befestigt sind.

2. Vorrichtung nach Anspruch 1, dadurch gekennzeichnet, dass am mittleren Glied (2) zwei Flügelpaare (11/12, 13/14) befestigt sind, welche beidseits über das mittlere Glied (2) hinausragen (Fig. 2 und 3).

3. Vorrichtung nach Anspruch 1, dadurch gekennzeichnet, dass die seitlichen Gelenkarme (15, 17), welche an den den ortsfesten Lagern (8a, 8) zugeordneten Schwenkachsen (e, h) befestigt sind, als dreieckförmige Rahmenkonstruktionen ausgebildet sind, deren dem mittleren Gelenkarm (16) zugewandte Schwenkachsen (f, g) zur Führung je eines biegsamen Mitnehmerelementes (22, 23) dienen, das an einem Rahmen (20, 21) locker aufgehängt ist, der seinerseits am mittleren Gelenkarm (16) im Bereich der jeweils gegenüberliegenden Schwenkachse befestigt ist (Fig. 4).

4. Vorrichtung nach Anspruch 3, dadurch gekennzeichnet, dass die beiden Rahmen (20, 21) der Mitnehmerelemente (22, 23) um 90° gegeneinander versetzt und bogenförmig einander übergreifend ausgebildet sind.

5. Vorrichtung nach Anspruch 4, dadurch gekennzeichnet, dass die beiden Rahmen (20, 21) mindestens in ihren aussenliegenden, voneinander abgewandten Abschnitten den beiden Kufen eines Oloids entsprechen.

6. Vorrichtung nach einem der Ansprüche 3 bis 5, dadurch gekennzeichnet, dass die biegsamen Mitnehmerelemente (22, 23) Folien sind, welche in ihrem Mittelbereich einen an der genannten Schwenkachse (f, g) lose gleitenden Ring (18, 19) aufweisen.

7. Vorrichtung nach einem der Ansprüche 1 bis 6, dadurch gekennzeichnet, dass mindestens eine der beiden ortsfesten Drehachsen (8, 8a) mit einer Vorrichtung (4, 5, 6) zur Abnahme bzw. Weiterleitung des Drehmomentes versehen ist (Fig. 1).

8. Vorrichtung nach einem der Ansprüche 1 bis 6, dadurch gekennzeichnet, dass der mittlere Gelenkarm (2) in seinem Mittelbereich ein drehstarr mit demselben verbundenes Rad (25) aufweist, das über ein endloses Verbindungsorgan (26), z.B. eine Kette oder einen Keilriemen, mit einem oberhalb des Mittelbereichs (M-M) der Vorrichtung angeordneten, rotierend gelagerten Organ (27), beispielsweise einem Kettenrad oder einer Keilriemenscheibe, verbunden ist (Fig. 9).

9. Vorrichtung nach einem der Ansprüche 1 bis 8, dadurch gekennzeichnet, dass am gleichen Gestell (7) zwei halbe, mit Mitnehmerelementen versehene Würfelgürtelketten (A, B) spiegelbildlich gelagert sind (Fig. 1 bis 2).

10. Vorrichtung nach Ansprüche 1, dadurch gekennzeichnet, dass die schaufel- oder flügelartigen Mitnehmerelemente in Bezug auf die Angriffsfläche, welche sie dem strömungsfähigen Medium darbieten, verstellbar sind.

11. Verwendung der Vorrichtung nach einem der Ansprüche 1 bis 10 zur Umwandlung von Windenergie in ein Drehmoment.

12. Verwendung nach Anspruch 11, dadurch gekennzeichnet, dass die Vorrichtung auf einem frei drehbaren Gestell angeordnet ist und sich daher der Windrichtung anpassen kann.

13. Verwendung der Vorrichtung nach einem der Ansprüche 1 bis 10 als Antriebsorgan für Flugkörper, z.B. anstelle von Helikopterrotoren.

14. Verwendung der Vorrichtung nach einem der Ansprüche 1 bis 10 als Schiffsantriebsorgan.

## Claims

1. Device for converting the energy of a flowable medium into torque or vice versa, having a frame (7) and at least two spindles (8, 8a) rotatably mounted on said frame (7) and spaced from one another, to which the two end portions of two lateral pivot arms (1, 3) and one half of a cubic belt chain (A, B) having a central pivot arm (2) are hinged, the two lateral pivot arms (1, 3) being connected to the fixed spindles (8, 8a) and the central pivot arm (2) by means of four pivot spindles a, b, c, d, which are successively offset relative to one another by 90°, characterised in that paddle- or vane- like blade elements (11, 12, 13, 14, 11a, 12a, 13a, 14a, 22, 23) :are fixed to at least one of the three pivot arms (1, 2, 3) of the half cubic belt chain (A, B).

2. Device according to claim 1, characterised in that, fixed to the central member (2), there are two pairs of vanes (11/12, 13/14) which project beyond the central member (2) on both sides (Figs 2 and 3).

3. Device according to claim 1, characterised in that the lateral pivot arms (15, 17),wich are secured to the pivot spindles (e, h) associated with the fixed bearings (8a, 8) are in the form of triangular frame structures, of which the pivot spindles (f, g) associated with the central pivot arm (16) each serve to guide a flexible blade element (22, 23) which is loosely suspended from a frame (20, 21), the frame being secured to the central pivot arm (16) in the region of the opposite pivot spindle (Fig. 4).

4. Device according to claim 3, characterised in that the two frames (20, 21) of the blade elements (22, 23) are offset relative to each other by 90° and are arranged so as to overlap each other in an arcuate configuration.

5. Apparatus according to claim 4, characterised in that the two frames (20, 21) correspond to the two runners of an oloid, at least in their outer portions remote from one another.

6. Device according to one of claims 3 to 5, characterised in that the fexible blade elements (22, 23) are sheet members which have a ring (18, 19) sliding loosely over the aforementioned pivot spindle (f, g) in their central region.

7. Device according to one of claims 1 to 6, charaterised in that at least one of the two fixed pivot spindles (8, 8a) is provided with means (4, 5, 6) for outputting or transmitting the torque (fig. 1).

8. Device according to one of claims 1 to 6, characterised in that the central pivot arm 2 has, in its central area, a wheel (25) which is in fixed rotation with said pivot arm (2) and wich is connected, via an endless connecting member (26), e.g. a chain or a V-belt, to a rotationally mounted member (27) arranged above the central region (M-M) of the device, said member (27) being for example a chain wheel or a V-belt pulley (Fig. 9).

9. Apparatus according to one of claims 1 to 8, characterised in that two half cubic belt chains (A, B) provided with blade elements are mounted in mirror symmetry on the same frame (7) (Figs. 1, 2).

10. Apparatus according to claim 1, characterised in that the paddle- or vane- like blade elements are adjustable in relation to the contact surface which they present to the flowable medium.

11. Use of the device according to one of claims 1 to 10 for converting wind energy into torque.

12. Use according to claim 11, characterised in that the device is arranged on a freely rotatable frame and can therefore adapt to the wind direction.

13 Use of the apparatus according to one of claims 1 to 10 as a drive means for aircraft, e.g. to replace helicopter rotors.

14. Use of the device according to one of claims 1 to 10 as a drive means for a ship.

## Revendications

1. Dispositif pour convertir l'énergie d'un milieu fluide en un moment de rotation ou inversement, comprenant une membrure (7) et au moins deux axes montés à rotation (8, 8a) sur cette membrure, à une certaine distance l'un de l'autre, auxquels sont articulés les deux segments d'extrémité des deux demi-chaînes de ceinture du cube Paul Schatz (A, B) comportant deux bras articulés latéraux (1, 3) et un bras articulé médian (2), les deux bras articulés latéraux (1, 3) étant reliés aux axes fixes (8, 8a) et au bras articulé médian (2) par quatre axes de pivotement (a, b, c, d), qui sont successivement décalés chacun de 90° l'un par rapport à l'autre, caractérisé en ce que, sur au moins un des trois bras articulés (1, 2, 3) des demi-chaines de ceinture du cube Paul Schatz (A, B), sont fixés des éléments entraîneurs du type aube ou ailette (11, 12, 13, 14, 11a, 12a, 13a, 14a, 22, 23).

2. Dispositif suivant la revendication 1, caractérisé en ce que deux paires d'ailettes (11/12, 13/14) sont fixées sur l'élément médian (2), ces ailettes faisant saillie de part et d'autre de l'élément médian (2) (Fig. 2 et 3).

3. Dispositif suivant la revendication 1, caractérisé en ce que les bras articulés latéraux (15, 17), qui sont fixés sur les axes de pivotement (e, h) associés aux pivots montés fixes (8a, 8), sont construits sous la forme de cadres triangulaires, dont les axes de pivotement (f, g) proches du bras articulé médian (16) servent chacun à guider respectivement un élément entraîneur flexible (22, 23) suspendu lâchement à un cadre (20, 21), qui, de son côté, est fixé au bras articulé médian (16) dans la zone de l'axe de pivotement respectivement opposé (Fig. 4).

4. Dispositif suivant la revendication 3, caractérisé en ce que les deux cadres (20, 21) des éléments entraîneurs (22, 23) sont mutuellement décalés de 90° et se chevauchent en arc de cercle.

5. Dispositif suivant la revendication 4, caractérisé en ce que les deux cadres (20, 21) correspondent aux deux éléments d'un "oloïde", au moins dans leurs segments extérieurs opposés l'un à l'autre.

6. Dispositif suivant l'une quelconque des revendications 3 à 5, caractérisé en ce que les éléments entraîneurs flexibles (22, 23) sont des feuilles minces, qui, dans leur zone centrale, présentent un anneau (18, 19) glissant librement sur ledit axe de pivotement (f, g).

7. Dispositif suivant l'une quelconque des revendications 1 à 6, caractérisé en ce qu'au moins un des deux axes de rotation montés fixes (8, 8a) est pourvu d'un dispositif (4, 5, 6) destiné à la réception ou à la transmission du moment de rotation (Fig. 1).

8. Dispositif suivant l'une quelconque des revendications 1 à 6, caractérisé en ce que le bras articulé médian (2) présente, dans sa zone médiane, une roue (25) calée sur ce bras de manière à tourner avec celui-ci et reliée elle-même par un organe de liaison sans fin (26), par exemple une chaîne ou une courroie trapézoïdale, à un organe (27) monté à rotation, disposé au-dessus de la zone médiane (M-M) du dispositif, par exemple une roue dentée ou une poulie à courroie trapézoïdale (Fig. 9).

9. Dispositif suivant l'une quelconque des revendications 1 à 8, caractérisé en ce que deux demi-chaînes de ceinture du cube Paul Schatz (A, B) pourvues d'éléments entraîneurs sont montées sur la même membrure (7) de manière énantiomorphe (Fig. 1 et 2).

10. Dispositif suivant la revendication 1, caractérisé en ce que les éléments entraîneurs du type ailette ou aube peuvent être déplacés par rapport aux surfaces de contact qu'ils offrent au fluide.

11. Utilisation du dispositif suivant l'une quelconque des revendications 1 à 10, en vue de la conversion d'énergie éolienne en un moment de rotation.

12. Utilisation du dispositif suivant la revendication 11, caractérisée en ce que le dispositif est monté sur une membrure pouvant tourner librement et peut, par conséquent, s'adapter à la direction du vent.

13. Utilisation du dispositif suivant l'une quelconque des revendications 1 à 10 en tant qu'organe de commande pour des véhicules, par exemple pour remplacer des rotors d'hélicoptères.

14. Utilisation du dispositif suivant l'une quelconque des revendications 1 à 10 en tant qu'organe d'entraînement de bateau.

FIG.1

FIG.2

FIG.3

7

FIG. 4

# FIG.5

# FIG.6

# FIG.5a

# FIG.6a

# FIG.7

# FIG.8

# FIG.7a

# FIG.8a

FIG.9

90°

FIG.11

FIG.10